**Europäisches Patentamt**

**European Patent Office**

**Office européen des brevets**

(19)

(11) Veröffentlichungsnummer: **0 045 850**
**A1**

(12)

# EUROPÄISCHE PATENTANMELDUNG

(21) Anmeldenummer: **81105325.5**

(22) Anmeldetag: **09.07.81**

(51) Int. Cl.³: **C 02 F 1/28**
**C 22 B 11/04**

(30) Priorität: **07.08.80 DE 3029897**

(43) Veröffentlichungstag der Anmeldung:
**17.02.82 Patentblatt 82/7**

(84) Benannte Vertragsstaaten:
**AT BE CH DE FR GB IT LI LU NL SE**

(71) Anmelder: **HOECHST AKTIENGESELLSCHAFT**
**Postfach 80 03 20**
**D-6230 Frankfurt/Main 80(DE)**

(72) Erfinder: **Lehr, Klaus, Dr.**
**Am grünen Weg 10**
**D-5030 Hürth-Knapsack(DE)**

(72) Erfinder: **Gero, Heymer, Dr.**
**Fasanenaue 12**
**D-5042 Erftstadt(DE)**

(54) **Verfahren zur Abtrennung von Metallen aus wässrigen Lösungen.**

(57) Halbedel- oder Edelmetalle aus Verbindungen dieser Metalle gelöst enthaltenden wäßrigen Lösungen werden durch Umsetzung mit gelbem Phosphor abgetrennt, indem man die wäßrigen Lösungen mit einem mit gelbem Phosphor beschichteten Trägermaterial in Berührung bringt. Dabei können die wäßrigen Lösungen durch eine Zone geführt werden, in welcher sich das mit gelbem Phosphor beschichtete Trägermaterial befindet, während sie anschließend durch eine weitere Zone geführt werden können, in welcher sich reines Trägermaterial befindet.

EP 0 045 850 A1

EP,7

0045850

HOECHST AKTIENGESELLSCHAFT

HOE 80/H 018

Verfahren zur Abtrennung von Metallen
aus wäßrigen Lösungen

Die vorliegende Erfindung betrifft ein Verfahren zur Abtrennung von Halbedel- und/oder Edelmetallen aus Verbindungen dieser Metalle gelöst enthaltenden wäßrigen Lösungen durch Umsetzung mit gelbem Phosphor.

Es ist bekannt, Quecksilberverbindungen aus wäßrigen Lösungen durch Ausfällung abzutrennen (DE-OSen 2 613 128 und 2 819 153 sowie DE-PS 2 102 900).

Es ist auch vorgeschlagen worden, wasserlösliche Quecksilberverbindungen aus ihren wäßrigen Lösungen mit Hilfe von Ionenaustauschern abzuscheiden (GB-PS 1 545 268 und US-PS 3 085 859).

Gelöste Schwermetallverbindungen von Kupfer, Silber, Palladium und Quecksilber können aus wäßrigen Lösungen auch elektrochemisch unter Verwendung von Fest- und Wirbelbettzellen entfernt werden (vergl. Chem.-Ing.-Tech. 50 (1978) Nr. 5, Seiten 332 bis 337).

Aus verdünnten wäßrigen Lösungen können weiterhin Quecksilberverbindungen auch durch Flüssig-Flüssig-Extraktion abgeschieden werden (vergl. Quim. Ind. (Madrid) 1978, 24 (2), Seiten 137 sowie 139 bis 142).

Schließlich ist es aus der US-PS 4 160 730 bekannt, Abwasser aus einer Chloralkalielektrolyse-Anlage mit Quecksilber-Kathoden dadurch zu entquicken, daß durch das Abwasser nach Behandlung mit Natriumhypochlorit und Natriumborhydrid Heißluft geblasen wird, wodurch der Quecksilber-Gehalt des Abwassers auf 1 ppm gesenkt wird.

Nachteilig ist bei den genannten Verfahren, daß sie entweder einen großen apparativen Aufwand erfordern oder eine Vorreinigung des Abwassers zur Eliminierung von Schmutzpartikeln und oxidierenden Bestandteilen notwendig ist oder der Abscheidungsgrad des Schwermetalls aus dem Abwasser unbefriedigend ist.

Es ist daher Aufgabe der vorliegenden Erfindung, ein Verfahren zur Abtrennung von Schwermetallen wie Quecksilber, Kupfer und Edelmetallen aus wäßrigen Lösungen, welche Verbindungen dieser Metalle gelöst enthalten, anzugeben, das mit geringem apparativen Aufwand und hohen Raum-Zeit-Ausbeuten ein praktisch metallfreies Wasser liefert. Das wird erfindungsgemäß dadurch erreicht, daß das Verfahren zur Abtrennung von Halbedel- und/oder Edelmetallen aus Verbindungen dieser Metalle gelöst enthaltenden wäßrigen Lösungen durch Umsetzung mit gelbem Phosphor dadurch gekennzeichnet ist, daß die wäßrigen Lösungen mit einem mit gelbem Phosphor beschichteten Trägermaterial in Berührung gebracht werden.

Das Verfahren gemäß der Erfindung kann weiterhin wahlweise auch noch dadurch ausgestaltet sein, daß

a) die wäßrigen Lösungen durch eine Zone geführt werden, in welcher sich das mit gelbem Phosphor beschichtete Trägermaterial befindet;

b) die wäßrigen Lösungen anschließend durch eine weitere Zone geführt werden, in welcher sich reines Trägermaterial befindet;

c) als Trägermaterial Aktivkohle verwendet ist;

d) als Trägermaterial Ruß verwendet ist;

e) als Trägermaterial hydrophobe Kieselsäure verwendet
   ist;

f) als Trägermaterial hydrophober Zeolith verwendet ist;

g) das mit gelbem Phosphor beschichtete Trägermaterial ein
   Gewichtsverhältnis von Trägermaterial zu gelbem Phosphor
   im Bereich von (1 : 0,001) bis (1 : x) aufweist, wobei
   x das Produkt aus dem Porenvolumen des Trägermaterials
   in Kubikzentimeter und der Dichte des gelben Phosphors
   in Gramm pro Kubikzentimeter bedeutet;

h) das mit Phosphor beschichtete Trägermaterial erhalten
   wird durch Einrühren des Trägermaterials in eine Dispersion von gelbem Phosphor in eine gegenüber gelbem
   Phosphor mindestens weitgehend inerte Flüssigkeit bei
   Temperaturen von 45°C bis zum Siedepunkt der Flüssigkeit;

i) als inerte Flüssigkeit Wasser dient;

k) das mit Phosphor beschichtete Trägermaterial erhalten
   wird durch Einrühren von Trägermaterial in eine Lösung
   von gelbem Phosphor in einem gegenüber gelbem Phosphor
   inerten Lösungsmittel und anschließendes Abziehen des
   Lösungsmittels über die Gasphase unter stetigem Bewegen
   der Aufschlämmung;

l) als Lösungsmittel Benzol dient;

m) als Lösungsmittel Schwefelkohlenstoff dient.

Das Verfahren gemäß der Erfindung eignet sich für Metalle mit positivem Normalpotential, beispielsweise Kupfer, Silber, Gold, Quecksilber oder Platinmetalle.

Die Dispergierung des gelben Phosphors in der inerten Flüssigkeit kann beim erfindungsgemäßen Verfahren mit hochtourigen Rührern, Dispergatoren oder Ultraschall erfolgen.

Beim Verfahren gemäß der Erfindung werden die Metalle auf dem mit gelbem Phosphor beschichteten Trägermaterial in schwerlöslicher Form - entweder als Element oder als Phosphid oder als Verbindung mit niedrigerer Oxidationsstufe - abgeschieden.

Das erfindungsgemäße Verfahren kann diskontinuierlich oder kontinuierlich mit in einer vertikal angeordneten Säure eingefülltem, mit gelbem Phosphor beschichteten Trägermaterial erfolgen, wobei es sich bei kontinuierlichem Betrieb empfiehlt, in der Säule unterhalb der Schicht des mit gelbem Phosphor beschichteten Trägermaterials eine Schicht aus reinem Trägermaterial vorzusehen.

Beispiel 1   (Vergleichsbeispiel)

In eine Säule von 4 cm Durchmesser wurden 50 g Aktivkohle (Epibon 693 der Fa. Lurgi) mit einer Korngröße von 250 bis 500 $\mu$ und einer BET-Oberfläche von 500 $m^2$/g eingefüllt, wobei eine Füllhöhe von 11 cm resultierte. Durch die Säule wurde quecksilberchloridhaltiges Wasser mit 500 mg $Hg^{++}$/l durchgesetzt, wobei der Durchsatz 7 Bettvolumina/h betrug. Nachdem die Säule mit 5 g Quecksilber belastet war, stieg der Quecksilbergehalt in dem aus der Säule ablaufenden Wasser über 0,01 mg/l an ("Durchbruch").

Beispiel 2 (Vergleichsbeispiel)

Es wurde die Säule wie in Beispiel 1 verwendet mit dem Unterschied, daß die Aktivkohle zusätzlich mit 9 g granuliertem gelbem Phosphor mit einem Granaliendurchmesser von etwa 2 mm überschichtet wurde. Es wurde quecksilberhaltiges Wasser in gleicher Menge und Qualität wie in Beispiel 1 durch die Säule durchgesetzt, wobei der "Durchbruch" in diesem Falle aber bereits nach einer Belastung der Säule, mit 3 g Quecksilber erfolgte.

Beispiel 3 (Gemäß der Erfindung)

3 g gelber Phosphor wurden mit Hilfe von Ultraschall in 1500 g Wasser bei 80°C dispergiert. In die Dispersion wurden 50 g Aktivkohle der Qualität wie im Beispiel 1 eingerührt, wobei der dispergierte gelbe Phosphor auf die Aktivkohle aufzog. Die so mit gelbem Phosphor beschichtete Aktivkohle wurde in eine Säule von 4 cm Durchmesser eingefüllt, wobei eine Füllhöhe von 12 cm resultierte. Durch die Säule wurde quecksilberchloridhaltiges Wasser mit 500 mg $Hg^{++}$/l durchgesetzt, wobei der Durchsatz 7 Bettvolumina/h betrug. Das aus der Säule ablaufende Wasser wies einen Quecksilbergehalt von weniger als 0,01 mg/l solange auf, bis die Säulenfüllung 58,5 g Quecksilber aufgenommen hatte ("Durchbruch").

Beispiel 4 (Gemäß der Erfindung)

Es wurde analog Beispiel 3 verfahren mit dem Unterschied, daß die mit gelbem Phosphor beschichtete Aktivkohle mit 50 g unbehandelter Aktivkohle der gleichen Herkunft unterschichtet war. Durch die Säule wurde quecksilberchlorid-

haltiges Wasser mit 500 ml $Hg^{++}$/l durchgesetzt, wobei der Durchsatz 4 Bettvolumina/h betrug. Das aus der Säule ablaufende Wasser wies einen Quecksilbergehalt von weniger als 0,01 mg/l bis zu einer Belastung der Säule mit 70,5 g Quecksilber auf ("Durchbruch").

Beispiel 5  (Gemäß der Erfindung)

In einem 2 l-Behälter wurde 1 l Wasser, welches 5112 mg $Hg^{++}$ enthielt, vorgelegt. Zugegeben wurden 2 g Ruß (Produkt der Fa. Union Rheinische Braunkohlenkraftstoff Aktiengesellschaft, D 5047 Wesseling), welcher mit 1,025 g gelbem Phosphor beschichtet war. Nach dreistündiger Reaktionszeit unter Rühren enthielt die wäßrige Phase nur noch 0,056 mg Quecksilber.

Beispiel 6  (Gemäß der Erfindung)

In einem 2 l-Behälter wurde 1 l Wasser, welches 2542 mg $Ag^+$ enthielt, vorgelegt. Zugegeben wurden 2 g des in Beispiel 5 verwendeten Rußes, welcher mit 1,040 g gelbem Phosphor beschichtet war. Nach dreistündiger Reaktionszeit unter Rühren enthielt die wäßrige Phase weniger als 1 mg Silber.

Beispiel 7  (Gemäß der Erfindung)

Es wurde wie in Beispiel 6 verfahren mit dem Unterschied, daß das Wasser 4643 mg $Ag^+$ enthielt, und daß der Ruß mit 0,929 g gelbem Phosphor beschichtet war. Am Ende der Reaktionszeit enthielt die wäßrige Phase ebenfalls weniger als 1 mg Silber.

Beispiel 8 (Gemäß der Erfindung)

In einem 2 l-Behälter wurde 1 l Wasser, welches 750 mg $Cu^{++}$ enthielt, vorgelegt, Zugegeben wurden 2 g des in Beispiel 5 verwendeten Rußes, welcher mit 1 g gelbem Phosphor beschichtet war. Nach dreistündiger Reaktionszeit unter Rühren bei Raumtemperatur enthielt die wäßrige Phase weniger als 0,05 mg Kupfer.

Beispiel 9 (Gemäß der Erfindung)

Es wurde analog Beispiel 4 verfahren mit dem Unterschied, daß durch die Säule eine wäßrige Silbernitrat-Lösung mit 50 mg $Ag^+$/l durchgesetzt wurde. Es konnten 10 g Silber aus der wäßrigen Lösung abgeschieden werden, ohne daß die ablaufende wäßrige Phase mehr als 1 mg $Ag^+$/l enthielt.

Beispiel 10 (Gemäß der Erfindung)

3 g gelber Phosphor wurden mit Hilfe von Ultraschall in 1500 ml Wasser bei 80°C dispergiert. In die Dispersion wurden 100 g hydrophobe Kieselsäure mit einem Maximum der Porenradienverteilung zwischen 200 und 400 $m^{-10}$ eingerührt, wobei der dispergierte gelbe Phosphor auf die Kieselsäure aufzog. Die mit dem gelben Phosphor beschichtete Kieselsäure wurde in eine Säule von 4 cm Durchmesser eingefüllt, wobei eine Füllhöhe von 17 cm resultierte. Die Säule wurde anschließend mit quecksilberchloridhaltigem Wasser mit 50 mg $Hg^{++}$/l beaufschlagt, wobei der Durchsatz 2 Bettvolumina/h betrug. Das aus der Säule ablaufende Wasser wies einen Quecksilbergehalt von weniger als 0,1 mg/l bis zu einer Belastung der Säule mit 39,5 g Quecksilber auf ("Durchbruch").

Beispiel 11  (Gemäß der Erfindung)

1 g gelber Phosphor wurde bei 60°C in 50 ml Benzol gelöst und anschließend wurden 35 ml Benzol abdestilliert. Die benzolische Phosphorlösung wurde bei 45°C mit 250 ml Wasser, welches 2 g des in Beispiel 5 verwendeten Rußes enthielt, vermischt. Die Mischung wurde 30 Minuten gerührt und anschließend das restliche Benzol abdestilliert. Nach Abkühlen auf Raumtemperatur wurden 500 ml Wasser mit einem $Hg^{++}$- Gehalt von 500 mg zugegeben. Die Suspension wurde 30 Minuten gerührt. Anschließend enthielt die überstehende wäßrige Lösung weniger als 0,1 mg Quecksilber/l.
Nach dem Abziehen von 500 ml Wasser wurden auf die gleiche Weise weitere 14 Chargen (je 500 ml Wasser mit 500 mg $Hg^{++}$) behandelt, ohne daß der Quecksilbergehalt der wäßrigen Lösung nach der Reaktionszeit von jeweils 30 Minuten unter Rühren mit dem mit gelbem Phosphor beschichteten Ruß 0,1 mg/l überstieg.

Verfahren zur Abtrennung von Metallen
aus wäßrigen Lösungen

Patentansprüche

1. Verfahren zur Abtrennung von Halbedel- und/oder Edelmetallen aus Verbindungen dieser Metalle gelöst enthaltenden wäßrigen Lösungen durch Umsetzung mit gelbem Phosphor, dadurch gekennzeichnet, daß die wäßrigen Lösungen mit einem mit gelbem Phosphor beschichteten Trägermaterial in Berührung gebracht werden.

2. Verfahren nach Anspruch 1, dadurch gekennzeichnet, daß die wäßrigen Lösungen durch eine Zone geführt werden, in welcher sich das mit gelbem Phosphor beschichtete Trägermaterial befindet.

3. Verfahren nach Anspruch 2, dadurch gekennzeichnet, daß die wäßrigen Lösungen anschließend durch eine weitere Zone geführt werden, in welcher sich reines Trägermaterial befindet.

4. Verfahren nach einem der Ansprüche 1 bis 3, dadurch gekennzeichnet, daß als Trägermaterial Aktivkohle verwendet ist.

5. Verfahren nach einem der Ansprüche 1 bis 3, dadurch gekennzeichnet, daß als Trägermaterial Ruß verwendet ist.

6. Verfahren nach einem der Ansprüche 1 bis 3, dadurch gekennzeichnet, daß als Trägermaterial hydrophobe Kieselsäure verwendet ist.

7. Verfahren nach einem der Ansprüche 1 bis 3, dadurch gekennzeichnet, daß als Trägermaterial hydrophober Zeolith verwendet ist.

8. Verfahren nach einem der Ansprüche 1 bis 7, dadurch gekennzeichnet, daß das mit gelbem Phosphor beschichtete Trägermaterial ein Gewichtsverhältnis von Trägermaterial zu gelbem Phosphor im Bereich von (1 : 0,001) bis (1 : x) aufweist, wobei x das Produkt aus dem Porenvolumen des Trägermaterials in Kubikzentimeter und der Dichte des gelben Phosphors in Gramm pro Kubikzentimeter bedeutet.

9. Verfahren nach einem der Ansprüche 1 bis 8, dadurch gekennzeichnet, daß das mit Phosphor beschichtete Trägermaterial erhalten wird durch Einrühren des Trägermaterials in eine Dispersion von gelbem Phosphor in eine gegenüber gelbem Phosphor mindestens weitgehend inerte Flüssigkeit bei Temperaturen von 45°C bis zum Siedepunkt der Flüssigkeit.

1o. Verfahren nach Anspruch 9, dadurch gekennzeichnet, daß als inerte Flüssigkeit Wasser dient.

11. Verfahren nach einem der Ansprüche 1 bis 8, dadurch gekennzeichnet, daß das mit Phosphor beschichtete Trägermaterial erhalten wird durch Einrühren von Trägermaterial in eine Lösung von gelbem Phosphor in einem gegenüber gelbem Phosphor inerten Lösungsmittel und anschließendes Abziehen des Lösungsmittels über die Gasphase unter stetigem Bewegen der Aufschlämmung.

12. Verfahren nach Anspruch 11, dadurch gekennzeichnet, daß als Lösungsmittel Benzol dient.

13. Verfahren nach Anspruch 11, dadurch gekennzeichnet, daß als Lösungsmittel Schwefelkohlenstoff dient.

**0045850**

Nummer der Anmeldung

Europäisches Patentamt

**EUROPÄISCHER RECHERCHENBERICHT**

EP 81 10 5325

| EINSCHLÄGIGE DOKUMENTE | | | KLASSIFIKATION DER ANMELDUNG (Int. Cl ³) |
|---|---|---|---|
| Kategorie | Kennzeichnung des Dokuments mit Angabe, soweit erforderlich, der maßgeblichen Teile | betrifft Anspruch | C 02 F 1/28<br>C 22 B 11/04 |
| X | <u>DE - A - 2 808 961</u> (HOECHST)<br><br>* Insgesamt * | 1-13 | |

---------

|  |
|---|
| **RECHERCHIERTE SACHGEBIETE (Int. Cl.³)** |
| C 02 F 1/28<br>C 22 B 11/04<br>C 22 B 3/00 |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 24.09.1981 | VAN AKOLEYEN |

EPA form 1503.1  06.78